# EUROPEAN PATENT SPECIFICATION

(11) **EP 3 441 188 B1**
(45) Date of publication and mention of the grant of the patent: **18.01.2023**
(21) Application number: 18187208.6
(22) Date of filing: 03.08.2018
(51) Int. Cl.: B23Q 1/03, B23Q 3/08, B25B 11/00

(54) **VACCUM WORK HOLDER**
VAKUUM WERKSTÜCKHALTER
SUPPORT DE TRAVAIL SOUS VIDE

(30) Priority: 07.08.2017 IT 201700091334
(43) Date of publication of application: 13.02.2019
(73) Proprietor: Muratori Machines S.r.l., 47899 Serravalle (SM)
(72) Inventor: Muratori, Antonio, 47893 Borgo Maggiore (San Marino) (IT)
(74) Representative: Fisauli, Beatrice A. M.

(56) References cited:
- EP-A2- 2 022 606
- WO-A2-92/10336
- KR-B1- 100 721 840
- US-A- 3 905 408
- US-A- 6 041 814
- US-A1- 2009 057 971
- US-A1- 2011 198 817

## Description

The present invention concerns a work table of the type with vacuum pressure clamping to clamp a workpiece in a numerically controlled machine tool, such as of the pantograph type, in particular a vertical machining center.

The invention also concerns a machine tool provided with said work table.

In the machine tool sector there are known machining centers, called "vertical" as they are equipped with a substantially vertical work surface, i.e. almost perpendicular to the ground.

Machine tools of this type are particularly advantageous in some applications as they allow reduced overall dimensions of the surface area of the machine and at the same time optimal access to the work area by the operator.

These machines thus configured are used in particular to machine flat elements, such as panels or sheets, made of different materials, such as wood, metal or composite materials.

Machining centers with vertical work table generally comprise a cross beam, movable between two opposite sides of the work table along a first substantially horizontal direction, and a machining head mounted to slide on said cross beam along a substantially vertical direction.

When a tool is mounted on the machining head, the interpolated movement of the cross beam and of said machining head allow the tool to be taken to any point of the surface of the work table and to make cuts or incisions on the panel held in position.

A numerical control unit manages precise positioning and movements of the cross beam and of the machining head and, therefore, of the tool.

In these machines, to obtain precise machining, the material, i.e. the panel or sheet, must be retained perfectly on the work table while the tool operates on a portion thereof.

For this reason, these machine tools are generally equipped with vacuum pressure work tables to clamp the workpiece to be machined in a stable and precise position.

Prior art vacuum pressure work tables comprise a table provided with a plurality of through openings communicating with chambers or ducts, generally in the rear part, in which a vacuum pressure is generated by means of a vacuum pump or equivalent devices.

In general, a layer of porous material, named spoil board, is interposed between the work table and the workpiece to be machined to prevent the tool, passing through the entire thickness of the workpiece, from impacting the surface of the work table.

The vacuum pressure that is generated in the area of the openings is transferred through the porous material of the spoil board to the entire surface of the work table. When a workpiece is placed on the surface of the spoil board and obstructs the passage of air in the area below, a force of attraction is generated, attracting it against said panel and clamping it in position.

The force of attraction that the work table exerts on the workpiece is a function of the vacuum pressure supplied by the vacuum pump that, net of the load losses, in proximity of the vacuum pressure work table is generally equal to around -0.70/-0.80 bar.

The force of attraction also depends on the surface of the workpiece. This force, for a panel 1 m x 1 m in size and with the vacuum pressure values indicated, is of around 7,000 - 8,000 kg. These conditions are optimal for machining the workpiece, as it is maintained perfectly still during machining but, obviously, they do not allow the operator to remove it from the work table at the end of said machining operations.

In prior art machining centers, to remove the workpiece (panel) the vacuum pump is temporarily excluded or deactivated to interrupt the vacuum pressure and allow the operator to detach the workpiece from the supporting surface. To prevent the panel from falling, especially if heavy or large in size, prior art machining centers are generally equipped with moving supports that can project from the work table and on which the lower edge of the workpiece can rest when the vacuum pressure work table is deactivated.

This prior art system has some drawbacks. Firstly, the arrangement of these supports and of the related actuators and sensors imply an increase in the complication and the cost of the machine.

Moreover, this system effectively supports only the workpiece or the workpieces that rests/rest directly on the supports. However, in many cases a panel is divided in several parts, some of which must be removed from the work table in an intermediate step of the machining operation. If these parts of the panel are not adequately supported by the supports (for example, divided parts close to the upper edge) they can fall when the vacuum pressure work table is deactivated, becoming damaged and creating dangerous situations for the operator.

Besides being used for vertical machining centers, vacuum pressure work tables such as those described above are also used in pantographs with horizontal work table. These machines, due to the orientation of the work table, are not subject to the aforesaid problems of safety related to possibility of the workpieces falling if there is no suction. Nonetheless, they still have some drawbacks.

In fact, as mentioned above, some machining operations require the removal of some parts of the semi-finished workpiece from the work table before carrying out the subsequent machining operations.

Also in this case, stopping the vacuum system allows the parts or parts involved to be easily detached from the work table. However, during this operation the operator could still accidentally bump a workpiece that requires to undergo further machining operations, eliminating/changing its positioning. Besides the time required to re-position the workpiece, this occurrence can also have repercussions on the quality and dimensional precision.

US 2009/057971 A1 discloses a universal holding device comprising a plurality of linear actuators, each having an end effector assembly provided with a vacuum cup. Each of the linear actuators includes a pneumatic control module, in fluid communication with a source of pressure, comprising a vacuum control valve, in fluid communication with the pressure source, a Venturi vacuum generator, in fluid communication between the vacuum control valve and a pneumatic control valve selectively piloted by a controller to provide positive pressure or negative pressure to the vacuum cup.

US 2011/198817 A1 discloses a carrier device, for carrying and holding semiconductor wafers having a very small thickness. The carrier device includes a transportable wafer chuck having an enclosed vacuum reservoir and a top surface configured to support a wafer.

KR 100721840 B1 discloses a vacuum handling system for chip components. The system is configured for charging workpieces into workpiece storing holes of a workpiece carrying table and discharging the workpieces. The vacuum system is provided with a workpiece carrying table, having workpiece storing holes, rotatably mounted on a table base, having vacuum suction grooves (7) communicating with the workpiece storing hole. The workpiece grooves communicate with a vacuum generation source via vacuum pipes. The system further comprises injection nozzles communicating with the workpiece storing holes. The injection nozzles communicate with a compressed air source trough compressed air pipes to discharge the workpieces from the workpiece storing holes. The vacuum system is further equipped with first and second adjusting units, controlled by a control unit. The latter, based on a signal from a negative pressure sensor, supplies compressed air from a compressed air generation source into to the vacuum pipes, or put the inside of the vacuum pipes in communication with the atmosphere to regulate a degree of vacuum in the vacuum pipes. In an embodiment, the second adjusting unit comprises an electromagnetic valve communicating with the atmosphere and has open and closed positions controlled by the control unit.

In this context, the object of the present invention is to propose a work table for a machine tool that overcomes the problems of prior art.

In particular, the object of the invention is to propose a work table of vacuum pressure type that facilitates the operations for positioning and detaching the workpieces to be machined.

Another object of the present invention is to produce a work table that guarantees greater safety for the operator who uses the machine and handles the workpieces.

Another object of the present invention is to produce a work table that makes it possible to avoid or limit the operations to re-position workpieces when partial or intermediate machining operations are carried out.

Yet another object of the present invention is to provide a vacuum pressure work table that allows automatic regulation of the force of attraction of the workpieces on the supporting surface, as a function of the number of workpieces and their surface and their specific weight.

A further object of the present invention is to provide a work table that is simple to produce and therefore less expensive than those of prior art machining centers.

These objects are achieved by a vacuum pressure work table for clamping at least one workpiece to be machined in a machine tool comprising:
- a plate-like element provided with a plurality of passages defining the same number of openings opening onto a front face;
- a covering panel made of a material permeable to air, positioned on the front face of the plate-like element and having a supporting surface on which the workpiece to be machined can be positioned;
- a vacuum generating system in communication with said passages to generate a vacuum pressure through the covering panel and consequently a force of attraction that attracts the workpiece against the supporting surface.

Said vacuum generating system comprises at least a vacuum pump in fluid communication with one or more of the aforesaid passages through at least a vacuum channel and at least a regulating servo valve that, in an open or partially open condition, places said vacuum channel in communication with the environment.

Said regulating servo valve, when open or partially open, places said vacuum channel in communication with the environment, allowing the vacuum pump to draw air from outside. The effect of partial or complete opening of the servo valve is therefore to vary, and specifically to reduce, the vacuum pressure that the vacuum pump generates in the vacuum channel and consequently the force of attraction on the workpiece.

Opening of the regulating servo valve is controlled by a control unit.

Normally that is when the work table requires to firmly retain the workpieces to be machined, i.e. in a working operating mode, the vacuum pressure is generally comprised between -0.7 bar and -0.9 bar.

According to the invention, said control unit comprises a vacuum pressure reducing operating mode, to facilitate detachment of workpieces from the supporting surface. In this mode, the control unit controls opening of the regulating servo valve to reduce the vacuum pressure in the vacuum channel to a predetermined reduction value.

More in detail, in this mode the vacuum pressure is taken to a reduction value that prevents the workpiece or the workpieces from detaching from the supporting surface under the effect of their weight but also that allows an operator to detach the workpiece from said supporting surface with limited effort.

Said reduction value is preferably chosen in the range between -0.03 bar and -0.07 bar and more preferably between -0.04 bar and -0.06 bar.

Said vacuum pressure reducing mode is, preferably, selectively activatable by means of a control device, generally operable by an operator, or through a process program stored in the control unit.

The vacuum pressure reducing mode is in fact activated when, at the end of machining operation, the operator requires to remove one or more workpieces from the work table.

According to another aspect of the invention, the vacuum system can comprise at least a digital vacuum gauge connected to the control unit. This gauge is configured to regulate opening of the regulating servo valve, at least in the vacuum pressure reducing mode, to take the vacuum pressure reduction value within a predetermined range. Said vacuum gauge is adapted to measure the vacuum pressure value at least in the vacuum channel.

Said control unit can be programmed to receive an input command relating to the vacuum pressure reduction value or, alternatively, said value or several values can already be stored therein.

According to another aspect of the invention, the control unit is configured so as to regulate, continuously and preferably in real time, the regulating servo valve to maintain the vacuum pressure reduction value within a predetermined range even when one or more workpieces are removed from the supporting surface or are placed thereon.

In a preferred variant, the servo valve is served by a pneumatic actuator, which can be controlled by a solenoid valve connected to the control unit.

According to another variant, said servo valve is served by an electric actuator controlled by the control unit.

According to another embodiment of the invention, the vacuum system can comprise an inverter that supplies the electric motor that drives the vacuum pump. Said inverter is connected to the control unit, which is programmed to vary the number of revolutions of the electric motor and of the vacuum pump and, consequently, the vacuum pressure value in the vacuum channel.

The vacuum system thus configured can thus be used to reduce the vacuum pressure value in the vacuum channel, so as to facilitate detachment of the workpieces from the supporting surface. According to another aspect of the invention, the vacuum system can thus be equipped with the aforesaid inverter in place of the regulating servo valve or, according to a further aspect, in combination therewith for finer regulation of the vacuum pressure reduction value.

Further characteristics and advantages of the present invention will become more apparent from the description of an example of a preferred, but not exclusive, embodiment of a work table for a vertical machining center, as illustrated in the accompanying drawings, wherein:

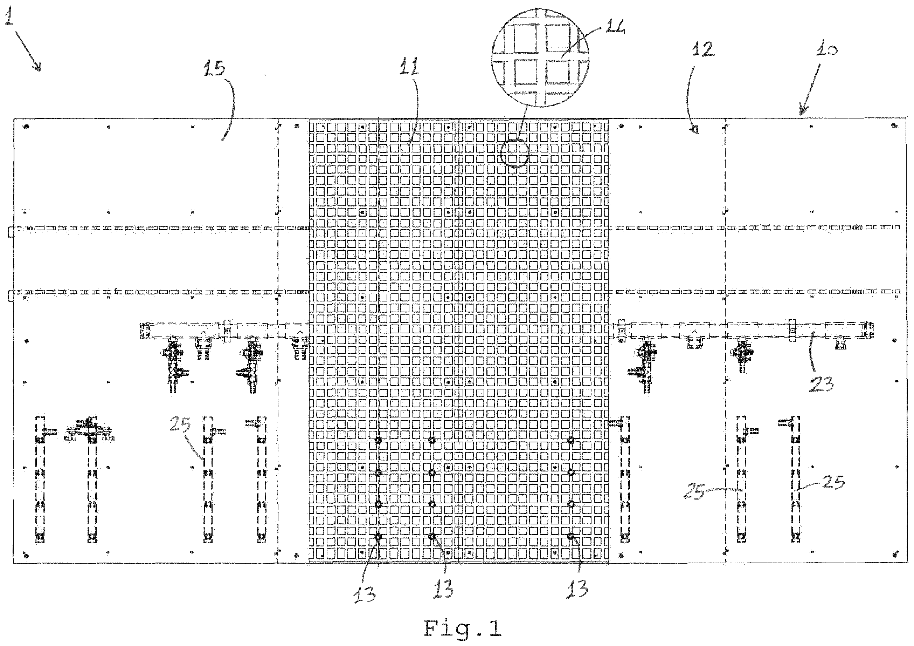

- Fig. 1 is a front view of the vacuum pressure work table according to the invention;
- Fig. 2 is a perspective rear view of the vacuum pressure work table of Fig. 1, in which the vacuum system is visible;

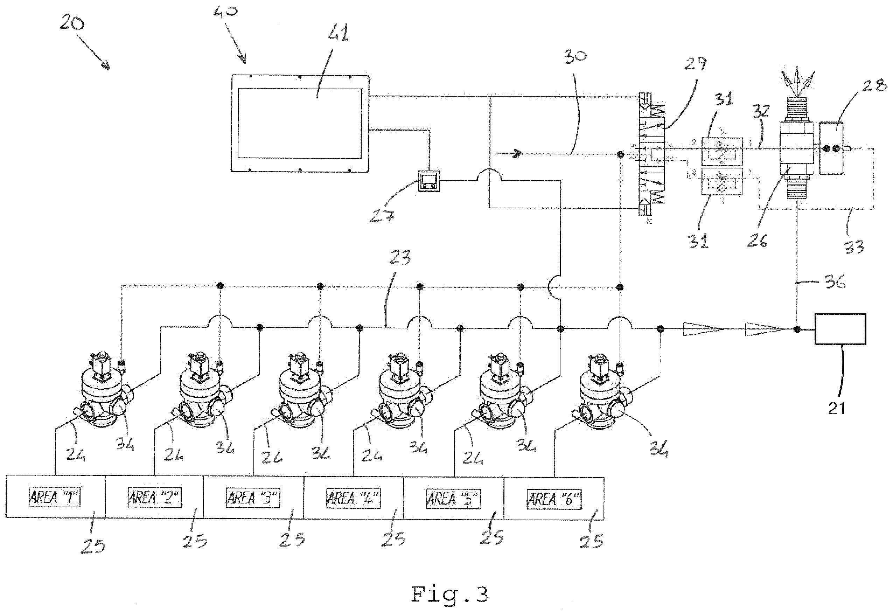

- Fig. 3 is simplified pneumatic diagram of the vacuum distribution system according to the invention.

With reference to the accompanying figures, the reference numeral 1 indicates as a whole a vacuum pressure work table for a machine tool.

The work table according to the invention is particularly suitable for use in a vertical machining center, but can also be used in a machine tool with horizontal work table, such as a pantograph or the like.

As already mentioned, the vacuum pressure work table has the task of retaining the workpieces in position on a supporting surface 11 during cutting, perforating, milling, contouring or similar machining operations. Machinable workpieces compatible with the work table are generally substantially flat elements, typically panels, made of different materials, such as paper, cardboard, plastic materials, expanded polymers, metals or composite panels comprising two or more of the aforesaid materials.

The work table of the present invention comprises a plate-like element 10 with a front face 12 and a rear face 16.

The plate-like element 10 has a plurality of passages 13 having openings 13' that open onto the front face 12. Said passages 13 can pass partially or completely through the plate-like element. Typically, the passages 13 are through holes.

Preferably, the passages 13 are equally distributed on the entire surface of the plate-like element or, alternatively, can be concentrated in a larger number only in a given area of the work table.

Generally, the passages 13 are arranged in rows parallel to one another and parallel to at least one side of the plate-like element or, alternatively, can also have another more or less free or random arrangement.

The passages 13 are in fluid connection with a vacuum generating system, indicated as a whole with 20 and better described below, to generate a vacuum pressure capable of attracting the workpieces to be machined toward the supporting surface 11 of the work table.

Preferably, the front face 12 of the plate-like element 10 is covered, completely or partially, with a covering panel 15 (or spoil board) made of a porous material or in any case permeable to air. Typically, this material is of fibrous type and can be derived from wood, such as MDF, or from other synthetic materials.

The aim of the panel 15 is both to protect the front face 12 of the plate-like element 10 from the action of the tool during the machining operations and to distribute the suction generated through the passages 13 and make it homogeneous on the whole of the surface of the work table.

In fact, due to the porosity of the fibrous material, the vacuum pressure that is generated near the openings 13' is transferred to the supporting surface 11, on the outer side of the work table.

When a workpiece is placed on said supporting surface 11, the vacuum pressure generating a force of attraction on the workpiece that retains this latter on the work table.

Both the number and the size of the passages 13 are chosen as a function of the useful surface of the work table, of the power of the vacuum generating system and of the force of attraction to be reached.

Preferably, to limit the number of openings 13, and therefore simplify the circuit of the vacuum system 20, a plurality of incisions 14 extending between the lateral edges and crossing over one another to form a mesh are made on the front surface 12 of the plate-like element 10. Said incisions 14 create channels, that pass through the passages 13, through which the vacuum pressure generated by the vacuum generating system is distributed on the whole of the surface of the work table.

For this purpose, the plate-like element 10 is preferably made of materials having good machinability by machines tools, such as plastic materials, one of these being Bakelite, or aluminum.

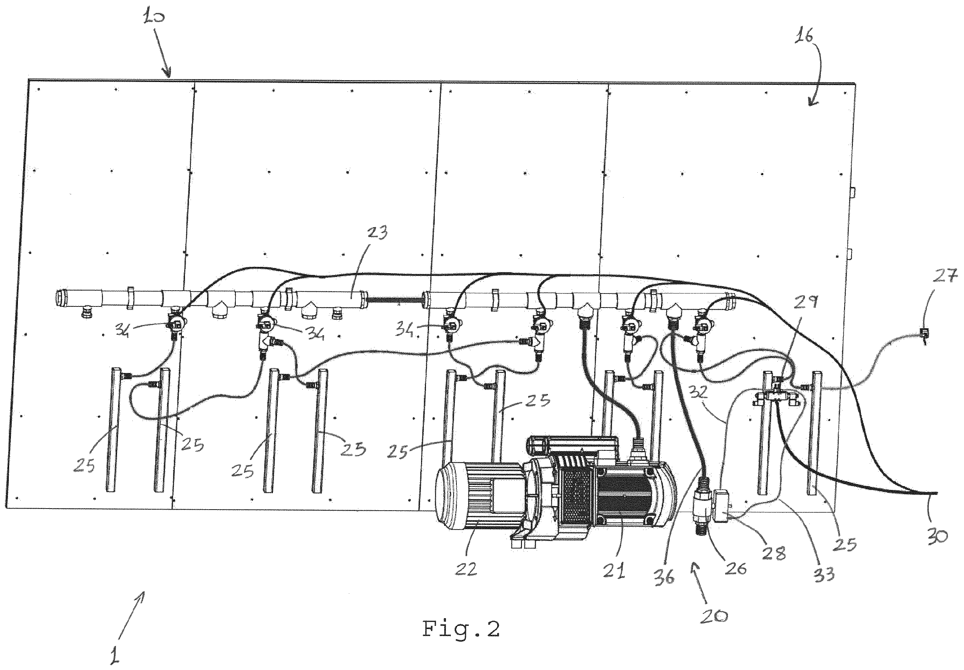

Fig. 2 schematically represents the vacuum generating system 20, hereinafter for brevity also called "vacuum system".

The vacuum system comprises at least a vacuum pump 21 operated by an electric motor 22.

The vacuum pump 21 is in communication with at least a vacuum channel 23, preferably mounted against the rear face 16 of the plate-like element 10.

The vacuum channel 23 is in turn placed in fluid communication with at least some of the passages 13 by means of pipes 24.

According to a preferred variant, manifolds 25, fitted on the rear face 16 of the plate-like element, place several passages 13 in communication with the pipes 24 in order to reduce the number of said pipes 24 and of the related connection devices.

According to the invention, the vacuum system 20 also includes a regulating servo valve 26 in fluid communication with the vacuum channel 23 through a pipe 36. Alternatively, the regulating servo valve 26 can be mounted directly on the vacuum channel 23.

Said regulating servo valve 26, when open or partially open, places the vacuum channel 23 in communication with the environment, allowing the vacuum pump 21 to draw air from outside.

In practice, the regulating servo valve 26 acts as partial by-pass that allows the a given flow of air, variable and adjustable, to enter the vacuum channel 23.

The effect of the partial or complete opening of the servo valve 26 is to vary, and specifically to reduce, the vacuum pressure that the vacuum pump 21 generates in the vacuum channel 23. Consequently, opening of the regulating servo valve 26 causes a reduction of the force of attraction exerted by the work table on the workpiece or workpieces placed on the supporting surface 11. The greater opening of the regulating servo valve 26 is, the smaller the vacuum pressure in the vacuum channel 23 and the force of attraction will be.

According to the invention, the vacuum system 20 is managed by a control unit 40 of PLC type. In detail, said control unit 40 controls and regulates the degree of opening of the regulating servo valve 26 between a completely closed position and a maximum opening position.

Advantageously, the control unit 40 is programmed so as to have a vacuum pressure reducing operating mode in which it controls the regulating servo valve 26 to reduce the vacuum pressure value in the vacuum channel 23 from a standard value that allows the workpieces to be retained for machining to a reduction value that allows an operator to easily detach the workpieces from the work table.

A suitable vacuum pressure reduction value in most applications is around -0.05 bar or slightly higher, for example -0.06 bar, when the workpieces to be machined are particularly heavy or have a limited supporting surface.

In these conditions, the force of attraction of the vacuum pressure work table is sufficient to prevent the workpiece or the workpieces from detaching from the work table and falling to the ground but, at the same time, to allow an operator to remove one or more of the aforesaid workpieces from the work table with limited effort.

According to a preferred variant, the control unit 40 can be configured to receive an input command relating to the reduction value to be maintained during the vacuum pressure reducing mode.

This value can be chosen and entered by an operator as a function of the material of the workpiece to be machined and of its surface extension and, therefore, its weight.

Alternatively, one or more vacuum pressure reduction values selectable by the operator can be stored in the control unit.

The vacuum pressure reducing mode can be activated by the operator through a control device, such as a dedicated button connected to the control unit 40 or directly by means of a control panel 41 integrated in the control unit.

According to a preferred variant, the vacuum system 20 further comprises a vacuum gauge 27, of digital type, in fluid communication with the vacuum channel 23 and connected to the control unit 40. Therefore, the control unit 40 receives, continuously and in real time, the vacuum pressure value measured in the vacuum channel 23.

Advantageously, when the control unit 40 is in the vacuum pressure reducing mode, it can be programmed to control, in real time, regulation of opening of the servo valve 26 to maintain the vacuum pressure value equal to the reduction value or in any case within a tolerance range.

This configuration is particularly useful for ensuring that the force of attraction exerted by the work table on the workpieces in the vacuum pressure reducing mode is always proportional to the supporting surface 11 covered by the aforesaid workpieces.

In fact, with the same opening of the servo valve 26, the vacuum pressure value in the vacuum channel 23 would vary as a function of the surface of the work table covered by the various workpieces. The greater the covered surface is, the smaller the air flow drawn by the vacuum pump 21 through the covering panel 15 and the passages 13 will be, and vice versa.

Consequently, if a workpiece of small size is present on the work table, there is a larger area of the covering panel 15 through which the vacuum pump 21 can more or less freely draw air.

In this case the control unit 40 acts on the servo valve 26 to regulate it in a completely closed or slightly open position.

On the contrary, if a workpiece with a very large surface or several workpieces of an equivalent total surface is/are present on the work table, the control unit 40 regulate the servo valve to a more open position to increase the flow of air drawn from outside and maintain the vacuum pressure reduction value within the predetermined range.

Moreover, real time regulation of the servo valve 26 is also useful when the operator requires to pick up several workpieces from the work table.

In fact, as some workpieces are removed from said work table, the control unit 40 controls the regulating servo valve 26, for example reducing opening thereof, to offset the increase in the air flow drawn directly through the covering panel 15.

Once the operations to pick up or position the workpieces on the supporting surface 11 have terminated, the vacuum pressure reducing mode can be deactivated to restore the vacuum pressure and the force of attraction to the value suitable to continue machining of the remaining workpieces on the supporting surface 11.

According to a variant of the invention, the servo valve 26 is of the type with moving disc, such as a butterfly valve or the like. In the variant illustrated, said servo valve 26 is served by a pneumatic actuator 28 that controls the opening and closing movements thereof.

Said pneumatic actuator 28 is in turn controlled by a solenoid valve 29 connected to a compressed air source 30.

The solenoid valve 29 is a 5-way, 3-position distribution valve controlled directly by the control unit 40.

Preferably, a flow regulating valve 31 is provided on each supply branch 32, 33 of the compressed air to the pneumatic actuator 28.

According to a preferred embodiment, the vacuum system 20 further comprises shut-off valves 34 interposed between the vacuum channel 23 and the passages 13, and more precisely placed upstream of the manifolds 25.

Said shut-off valves 34 are controlled by the control unit 40 and are configured to isolate a certain number of passages 13 of a given area from the vacuum channel 23. Shutting off one or more areas can be controlled directly by the operator or automatically through a process program executed by the control unit 40.

Therefore, said shut-off valves 34 have the purpose of preventing suction of the work table in given areas in which there are no workpieces to be machined, thereby optimizing the maximum vacuum pressure value during machining.

According to another variant of the invention, the vacuum system 20 can comprise an inverter 35 that supplies the electric motor 22 that operates the vacuum pump 21.

The inverter 35 is connected to the control unit 40 and controlled thereby.

The aim of the inverter 35 is to regulate the mains current frequency to vary the number of revolutions of the motor 22, and hence the speed of the vacuum pump 21 and, consequently, the vacuum pressure that said vacuum pump 21 implements in the vacuum channel 23.

Also in this variant the control unit 40 is programmed so as to have a vacuum pressure reducing operating mode in which it controls the inverter 35 to reduce the speed of the motor 22 and of the vacuum pump 21 so as to reduce the vacuum pressure to a predetermined reduction value.

Reduction of the vacuum pressure can take place through a program stored in the control unit, which for example has one or more reduced rotation speeds, or as a function of the vacuum pressure value measured.

In this case, the vacuum system 20 is equipped with the digital vacuum gauge 27 connected to the control unit 40.

In this variant, regulation of the reduced vacuum pressure can take place based on one or more predefined reduction values or based on a reduction value entered by the operator who controls the machine.

Also in this variant, the control unit 40, in vacuum pressure reducing mode, can be programmed to continuously acquire the vacuum pressure value in the vacuum channel 23 and to control the inverter 35 continuously and in real time, in order to maintain the reduction value at the set value or in any case within a tolerance range.

The system provided with the inverter 35 associated with the control unit 40 can be used as alternative to the regulation system by means of the servo valve 26 or, optionally, in combination with this latter.

In this second case, regulation of opening of the servo valve 26 allows macroscopic regulation of the vacuum pressure value, while regulation of the number of revolutions of the vacuum pump 21, by means of the inverter 35, allows precision regulations to maintain the reduction value as close as possible to the preset value.

As can be understood from the above description, the vacuum pressure work table of the present invention allows an operator to carry out the operations to remove the machined workpieces easily and in total safety.

Regulation of the vacuum pressure through the servo valve 26 and through the inverter 35, which can be managed continuously and in real time by the control unit 40, also offers substantially constant resistance to detachment of the workpieces when various workpieces to be removed in sequence are positioned on the work table.

Moreover, the work table allows any workpieces already on the work table, and which must be subjected to further machining operations, to be maintained precisely in position, thus preventing loss of time to repeat positioning operations, to the advantage of the productivity of the machine.

Moreover, the work table of the present invention is of simpler construction with respect to prior art suction tables provided with movable means to support the workpieces, and thus less expensive to produce.

The invention has been described purely for illustrative and non-limiting purposes, according to some preferred embodiments. Those skilled in the art may find numerous other embodiments and variants, all falling within the scope of protection of the claims below.

## Claims

1. A vacuum pressure work table for clamping at least one workpiece to be machined in a machine tool, in particular a vertical machining center, comprising:
- a plate-like element (10) provided with a plurality of passages (13) defining the same number of openings (13') opening onto a front face (12);
- a covering panel (15) made of a material permeable to air, positioned on the front face (12) of the plate-like element and having a supporting surface (11) on which the workpiece to be machined can be positioned;
- a vacuum generating system (20) in communication with said passages (13) to generate a vacuum pressure through the covering panel (15) and consequently a force of attraction of the workpiece toward the supporting surface (11);
wherein said vacuum generating system (20) comprises at least a vacuum pump (21) in fluid communication with one or more of the aforesaid passages (13) through at least a vacuum channel (23), wherein the vacuum pressure work table further comprises
- at least a regulating servo valve (26) that, in an open or partially open condition, places said vacuum channel (13) in communication with the environment, allowing the vacuum pump (21) to draw air from outside, to vary the vacuum pressure in the vacuum channel (23) and consequently the force of attraction exerted on the workpiece; and
- a control unit (40) that controls opening of said regulating servo valve (26);
wherein said control unit (40) comprises a working operating mode where the work table firmly retains the workpieces to be machined and a vacuum pressure reducing operating mode to facilitate detachment of workpieces from the supporting surface (11), in which said control unit (4) controls opening of the regulating servo valve (26), at least in the vacuum pressure reducing mode, to reduce the vacuum pressure in the vacuum channel (23) to a predetermined reduction value.

2. The vacuum pressure work table according to claim 1, **characterized in that** said vacuum pressure reducing operating mode can be activated selectively by means of a control device, operable by an operator, or through a process program of the control unit (40).

3. The vacuum pressure work table according to any one of the preceding claims, **characterized by** comprising at least a digital vacuum gauge (27) adapted to measure the vacuum pressure value at least in the vacuum channel (23), the control unit (40) being connected to said vacuum gauge (27) and being configured to regulate opening of the regulating servo valve (26), at least in the vacuum pressure reducing mode, to take the vacuum pressure reduction value within a predetermined range.

4. The vacuum pressure work table according to claim 3, **characterized in that** said control unit (40) is programmed to receive an input command relating to a chosen vacuum pressure reduction value.

5. The vacuum pressure work table according to any one of the preceding claims, **characterized in that** the vacuum pressure reduction value in the vacuum channel (23) is comprised between -0.03 bar and -0.07 bar.

6. The vacuum pressure work table according to one of claims 3 to 5, **characterized in that** at least in the vacuum pressure reducing mode, the control unit (40) is configured to regulate, continuously and in real time, the servo valve (26) to maintain the vacuum pressure reduction value within the predetermined range even when one or more workpieces are removed from the supporting surface (11) or positioned thereon.

7. The vacuum pressure work table according to any one of the preceding claims, **characterized in that** the servo valve (26) is served by a pneumatic actuator (28) that can be controlled by a solenoid valve (29) connected to the control unit (40).

8. The vacuum pressure work table according to any one of claims 1 to 6, **characterized in that** the servo valve (26) is served by an electric actuator controlled by the control unit (40).

9. The vacuum pressure work table according to any one of the preceding claims, **characterized in that** the vacuum pump (21) is driven by an electric motor (22), the vacuum system comprising an inverter (35), which supplies said electric motor (22), connected to the control unit (40), which is programmed to vary the number of revolutions of the electric motor (22) and of the vacuum pump (21) and, consequently, the vacuum pressure value in the vacuum channel (23).

## Patentansprüche

1. Ein Vakuumdruck-Arbeitstisch zum Aufspannen mindestens eines zu bearbeitenden Werkstücks in einer Werkzeugmaschine, insbesondere einem Vertikal-Bearbeitungszentrum, umfassend:
- ein plattenförmiges Element (10), das mit einer Vielzahl von Durchgängen (13) versehen ist, die die gleiche Anzahl von Öffnungen (13') definieren, die sich auf einer Vorderseite (12) öffnen;
- eine Abdeckplatte (15) aus einem luftdurchlässigen Material, die auf der Vorderseite (12) des plattenförmigen Elements angeordnet ist und eine Auflagefläche (11) aufweist, auf der das zu bearbeitende Werkstück positioniert werden kann;
- ein Vakuumerzeugungssystem (20), das mit den besagten Durchgängen (13) in Verbindung steht, um einen Unterdruck durch die Abdeckplatte (15) und folglich eine Anziehungskraft des Werkstücks auf die Auflagefläche (11) zu erzeugen;
wobei das besagte Vakuumerzeugungssystem (20) mindestens eine Vakuumpumpe (21) umfasst, die in Fluidverbindung mit einem oder mehreren der besagten Durchgänge (13) durch mindestens einen Vakuumkanal (23) steht, wobei der Vakuumdruck-Arbeitstisch ferner Folgendes umfasst:
- mindestens ein Regulierungs-Servoventil (26), das, in einem geöffneten oder teilweise geöffneten Zustand, den besagten Vakuumkanal (13) mit der Umgebung in Verbindung bringt und es der Vakuumpumpe (21) ermöglicht, Luft von außen anzusaugen, um den Vakuumdruck in dem Vakuumkanal (23) und folglich die auf das Werkstück ausgeübte Anziehungskraft zu verändern; und
- eine Steuereinheit (40), die das Öffnen des besagten Regulierungs-Servoventils (26) steuert;
wobei die besagte Steuereinheit (40) eine Arbeitsbetriebsart, in der der Arbeitstisch die zu bearbeitenden Werkstücke entschieden festhält, und einen vakuumdruckreduzierenden Betriebsmodus umfasst, um das Abnehmen von Werkstücken von der Auflagefläche (11) zu erleichtern, bei der die besagte Steuereinheit (4) das Öffnen des Regulierungs- Servoventils (26) zumindest im vakuumdruckreduzierenden Modus steuert, um den Vakuumdruck im Vakuumkanal (23) auf einen vorbestimmten Reduktionswert zu reduzieren.

2. Der Vakuumdruck-Arbeitstisch gemäß Anspruch 1, **dadurch gekennzeichnet, dass** der besagte vakuumdruckreduzierende Betriebsmodus selektiv mittels einer von einem Bediener bedienbaren Steuervorrichtung oder durch ein Bearbeitungsprogramm der Steuereinheit (40) aktiviert werden kann.

3. Der Vakuumdruck-Arbeitstisch gemäß einem jeglichen der vorhergehenden Ansprüche, **dadurch gekennzeichnet, dass** er mindestens ein digitales Vakuummessgerät (27) umfasst, das geeignet ist, den Vakuumdruckwert mindestens im Vakuumkanal (23) zu messen, wobei die Steuereinheit (40) mit dem besagten Vakuummessgerät (27) verbunden und so konfiguriert ist, dass sie das Öffnen des Regulierungs-Servoventils (26) zumindest im vakuumdruckreduzierenden Modus reguliert, um den Vakuumdruckreduzierungswert innerhalb eines vorbestimmten Bereichs zu bringen.

4. Der Vakuumdruck-Arbeitstisch gemäß Anspruch 3, **dadurch gekennzeichnet, dass** die besagte Steuereinheit (40) so programmiert ist, um einen Eingangsbefehl zu empfangen, der sich auf einen gewählten Vakuumdruckreduzierungswert bezieht.

5. Der Vakuumdruck-Arbeitstisch gemäß einem jeglichen der vorhergehenden Ansprüche, **dadurch gekennzeichnet, dass** der Vakuumdruckreduzierungswert im Vakuumkanal (23) zwischen -0,03 bar und -0,07 bar liegt.

6. Der Vakuumdruck-Arbeitstisch gemäß einem der Ansprüche 3 bis 5, **dadurch gekennzeichnet, dass**, zumindest im vakuumdruckreduzierenden Modus, die Steuereinheit (40) so konfiguriert ist, dass sie, kontinuierlich und in Echtzeit, das Servoventil (26) reguliert, um den Vakuumdruckreduzierungswert auch dann innerhalb des vorgegebenen Bereichs zu halten, wenn ein oder mehrere Werkstücke von der Auflagefläche (11) entfernt oder darauf positioniert werden.

7. Der Vakuumdruck-Arbeitstisch gemäß einem jeglichen der vorhergehenden Ansprüche, **dadurch gekennzeichnet, dass** das Servoventil (26) von einem pneumatischen Aktuator (28) bedient wird, der von einem Magnetventil (29) gesteuert werden kann, das mit der Steuereinheit (40) verbunden ist.

8. Der Vakuumdruck-Arbeitstisch gemäß einem jeglichen der Ansprüche 1 bis 6, **dadurch gekennzeichnet, dass** das Servoventil (26) von einem elektrischen Aktuator bedient wird, der von der Steuereinheit (40) gesteuert wird.

9. Der Vakuumdruck-Arbeitstisch gemäß einem jeglichen der vorhergehenden Ansprüche, **dadurch gekennzeichnet, dass** die Vakuumpumpe (21) von einem Elektromotor (22) angetrieben wird, wobei das Vakuumsystem einen Inverter (35) umfasst, der den besagten Elektromotor (22) versorgt, der mit der Steuereinheit (40) verbunden ist, die programmiert ist, um die Anzahl der Umdrehungen des Elektromotors (22) und der Vakuumpumpe (21) und folglich den Wert des Vakuumdrucks in dem Vakuumkanal (23) zu verändern.

## Revendications

1. Table de travail sous vide pour serrer au moins une pièce à usiner dans une machine-outil, en particulier un centre d'usinage vertical, comprenant :
- un élément en forme de plaque (10) muni d'une multitude de passages (13) définissant le même nombre d'ouvertures (13') s'ouvrant sur une face avant (12) ;
- un panneau de couverture (15) fait d'un matériau perméable à l'air, positionné sur la face avant (12) de l'élément en forme de plaque et ayant une surface de support (11) sur laquelle la pièce à usiner peut être positionnée ;
- un système de génération de vide (20) en communication avec lesdits passages (13) pour générer une pression de vide à travers le panneau de couverture (15) et par conséquent une force d'attraction de la pièce à usiner vers la surface de support (11) ;
où ledit système de génération de vide (20) comprend au moins une pompe à vide (21) en communication fluidique avec un ou plusieurs des passages susmentionnés (13) par l'intermédiaire d'au moins un canal à vide (23), où la table de travail sous vide comprend en outre
- au moins une servovanne de régulation (26) qui, dans une condition ouverte ou partiellement ouverte, place ledit canal de vide (13) en communication avec l'environnement, permettant à la pompe à vide (21) d'aspirer de l'air de l'extérieur, pour faire varier le vide dans le canal de vide (23) et par conséquent la force d'attraction exercée sur la pièce ; et
- une unité de commande (40) qui commande l'ouverture de ladite servovanne de régulation (26) ;
où ladite unité de commande (40) comprend un mode de fonctionnement de travail dans lequel la table de travail retient fermement les pièces à usiner et un mode de fonctionnement de réduction du vide pour faciliter le détachement des pièces de la surface de support (11), dans lequel ladite unité de commande (4) commande l'ouverture de la servovanne de régulation (26), au moins dans le mode de réduction du vide, pour réduire le vide dans le canal de vide (23) à une valeur de réduction prédéterminée.

2. Table de travail sous vide selon la revendication 1, **caractérisée par le fait que** ledit mode de fonctionnement de réduction du vide peut être activé sélectivement au moyen d'un dispositif de commande, actionnable par un opérateur, ou par un programme de traitement de l'unité de commande (40).

3. Table de travail sous vide selon l'une des revendications précédentes, **caractérisée par le fait qu'**elle comprend au moins un vacuomètre numérique (27) adapté pour mesurer la valeur de vide au moins dans le canal de vide (23), l'unité de commande (40) étant connectée audit vacuomètre (27) et étant configurée pour réguler l'ouverture de la servovanne de régulation (26), au moins dans le mode de réduction du vide, pour prendre la valeur de réduction du vide dans une plage prédéterminée.

4. Table de travail sous vide selon la revendication 3, **caractérisée par le fait que** ladite unité de commande (40) est programmée pour recevoir une commande d'entrée relative à une valeur de réduction du vide choisie.

5. Table de travail sous vide selon l'une des revendications précédentes, **caractérisée par le fait que** la valeur de réduction du vide dans le canal à vide (23) est comprise entre -0,03 bar et -0,07 bar.

6. Table de travail sous vide selon l'une des revendications 3 à 5, **caractérisée par le fait qu'**au moins dans le mode de réduction du vide, l'unité de commande (40) est configurée pour réguler, en continu et en temps réel, la servovanne (26) pour maintenir la valeur de réduction du vide dans la plage prédéterminée même lorsqu'une ou plusieurs pièces sont retirées de la surface de support (11) ou positionnées sur celle-ci.

7. Table de travail sous vide selon l'une des revendications précédentes, **caractérisée par le fait que** la servovanne (26) est desservie par un actionneur pneumatique (28) qui peut être commandé par une électrovanne (29) reliée à l'unité de commande (40).

8. Table de travail sous vide selon l'une des revendications 1 à 6, **caractérisée par le fait que** la servovanne (26) est desservie par un actionneur électrique commandé par l'unité de commande (40).

9. Table de travail sous vide selon l'une des revendications précédentes, **caractérisée par le fait que** la pompe à vide (21) est entraînée par un moteur électrique (22), le système de vide comprenant un onduleur (35), qui alimente ledit moteur électrique (22), relié à l'unité de commande (40), qui est programmée pour faire varier le nombre de tours du moteur électrique (22) et de la pompe à vide (21) et, par conséquent, la valeur de la pression de vide dans le canal de vide (23).
